# EUROPÄISCHE PATENTSCHRIFT

(11) **EP 1 368 966 B1**
(45) Veröffentlichungstag und Bekanntmachung des Hinweises auf die Patenterteilung: **26.01.2005**
(21) Anmeldenummer: 01990321.0
(22) Anmeldetag: 19.12.2001
(51) Int. Cl.: H04N 5/455, H04N 7/173, H04N 5/44, H04B 1/20

(54) **VERFAHREN ZUR WIEDERGABE VON VIDEO- UND AUDIODATEN**
METHOD FOR RENDERING VIDEO AND AUDIO DATA
PROCEDE DE REPRODUCTION DE DONNEES VIDEO ET AUDIO

(30) Priorität: 02.03.2001 DE 10110043
(43) Veröffentlichungstag der Anmeldung: 10.12.2003
(73) Patentinhaber: ROBERT BOSCH GMBH, 70442 Stuttgart (DE)
(72) Erfinder: KOCH, Hartwig, 31139 Hildesheim (DE)
(86) Internationale Anmeldenummer: PCT/DE2001/004793
(87) Internationale Veröffentlichungsnummer: WO 2002/071744

(56) Entgegenhaltungen:
- WO-A-00/41381
- WO-A-00/76217
- WO-A-99/34599
- DE-A- 19 725 898
- DE-A- 19 901 733

## Beschreibung

### Stand der Technik

Die Erfindung geht aus von einem Verfahren zur Darstellung von Videodaten nach der Gattung des unabhängigen Patentanspruchs.

Heutige Autoradios als Rundfunkempfänger weisen häufig ein CD-Laufwerk auf, wobei auch Navigationsgeräte ein CD-ROM-Laufwerk haben, auf dem Audio CDs abspielbar sind.

Weitere Informationen über den Stand der Technik können den folgenden Dokumenten entnommen werden:

WO-A-0041381 beschreibt die Fernsteuerung eines Fernsehrundfunkempfängers. Der Fernseher kann mit Peripheriegeräten wie einem Videorecorder oder einem DVD-Abspielgerät verbunden sein. Diese Geräte können auch in dem Fernsehgerät integriert sein. In der Fernsteuerung eingebaut befinden sich jeweils ein Bildschirm und ein Lautsprecher, die es ermögllchen, ein audiovisuelles Programm unabhängig von einem Hauptprogramm zu verfolgen. Die Fernsteuerung ist über drahtlose Schnittstellen bidirektional an das Fernsehgerät angebunden und empfängt kodierte audiovisuelle Daten, die mit entsprechenden Audio-/Videoprozessoren dekodiert werden. Ein Lautsprecher dient der vom Fernsehgerät unabhängigen Audiowiedergabe. Es lässt sich aber auch das auf dem Fernsehgerät angezeigte Bild auf der Fernbedienung darstellen und den dazugehörenden Ton über die Lautsprecher des Fernsehers wiedergeben.

WO-A-0076217 beschreibt die Verwendung eines 'tragbaren digitalen Assistenten' (PDA) zum Empfang von audiovisuellen Daten eines interaktiven Fernsehsystems über eine drahtlose Schnittstelle.

DE-A-19725898 offenbart ein Unterhaltungssystem in einem Fahrzeug, dass die individuelle Ausstrahlung von audiovisuellen Programmen mittels eines zentralen Rundfunkempfängers mit integriertem Datenabspielgerät zu den Passagieren ermöglicht.

### Vorteile der Erfindung

Das erfindungsgemäße Verfahren zur Darstellung von Videodaten mit den Merkmale des unabhängigen Patentanspruchs hat demgegenüber den Vorteil, dass Videodaten, die auf einem Datenträger im Auto vorhanden sind, mit einem elektronischen Begleiter, vorzugsweise einem persönlichen digitalen Assistenten (PDA) oder einem Mobiltelefon (UMTS), der ein großes Display aufweist, dargestellt werden. Darüber hinaus wird auch die Videodekodierung auf dem elektronischen Begleiter durchgeführt. Damit wird der Prozessor des Autoradios als dem Rundfunkempfänger davon entlastet. Üblicherweise hat auch ein Autoradio ein zu kleines Display, um beispielsweise abendfüllende Spielfilme darauf sinnvoll darzustellen. Dazu kann nun der elektronische Begleiter verwendet werden. Darüber hinaus kann dies auch nach Bedarf geschehen, d.h. Personen, die sich sowieso einen persönlichen digitalen Assistenten anschaffen wollen, haben so einen Zusatznutzen, während andere, die auf eine Videodarstellung im Auto verzichten, sich nicht unnötige Hardware anschaffen müssen. Die Audiodekodierung der zu den Videodaten zugehörigen Audiodaten kann dabei entweder vom PDA dekodiert und abgespielt werden oder vom Autoradio für die Nutzung der Stereoanlage des Autoradios verwendet werden.

Es ist vorteilhafterweise möglich, dass der Rundfunkempfänger die Videodaten in einem Broadcast-Modus an verschiedene elektronische Begleiter versendet, so dass mehr als ein elektronischer Begleiter in der Lage ist, die Videodaten gleichzeitig darzustellen. Dabei kann es insbesondere vorgesehen sein, dass ein Ensemble von Videodaten bereitgestellt wird, so dass sich mehrere Nutzer mit ihren jeweiligen PDAs unterschiedliche Videos anschauen können.

Besonders vorteilhaft ist, dass der elektronische Begleiter Steuerdaten für den Datenträger zu dem Autoradio überträgt, um so spezielle Daten von dem Datenträger abzurufen. Er kann beispielsweise bei einer Wiederholung oder auch bei einem speziellem Aufruf der Videodaten notwendig sein.

Weiterhin ist es von Vorteil, dass ein Autoradio zur Durchführung des erfindungsgemäßen Verfahrens vorliegt, das eine Lesevorrichtung für den Datenträger, einen ersten Prozessor zur Dekodierung von Audiodaten, eine erste Schnittstelle zur Übertragung der Daten von und zu dem elektronischen Begleiter und Mittel zur Wiedergabe der Audiodaten aufweist. Die Schnittstelle zur Übertragung der Daten ist entweder eine Infrarot-, eine Funk- oder eine kabelgebundene Übertragungsschnittstelle.

Ein elektronischer Begleiter zur Durchführung des erfindungsgemäßen Verfahrens hat dafür eine kompatible Schnittstelle, einen zweiten Prozessor zur Dekodierung der Videodaten und eine Anzeige zur Wiedergabe der Videodaten. In einer Weiterbildung ist vorgesehen, dass der Prozessor des elektronischen Begleiters auch zur Dekodierung der Audiodaten ausgebildet ist. Dann kann es auch sein, dass der elektronische Begleiter mit Mittel zur akustischen Wiedergabe der Audiodaten verbunden ist, also mit einem Lautsprecher, sofern sie in dem elektronischen Begleiter nicht schon integriert sind.

### Zeichnung

Ausführungsbeispiele der Erfindung sind in der Zeichnung dargestellt und werden in der nachfolgenden Beschreibung näher erläutert. Es zeigt Figur 1 eine Darstellung einer erfindungsgemäßen Vorrichtung, Figur 2 ein Blockschaltbild der erfindungsgemäßen Vorrichtung und Figur 3 ein Flußdiagramm des erfindungsgemäßen Verfahrens.

### Beschreibung

Videos werden derzeit immer mehr digitalisiert. Dabei werden insbesondere MPEG2 und MPEG4 als Quellenkodierungen verwendet. Damit ist es möglich, hochwertige abendfüllende Videos auf einem Medium zu speichern. Erfindungsgemäß wird nun vorgeschlagen, einen elektronischen Begleiter zu verwenden, auf dem Videodaten, die auf einem Datenträger, also auf einer CD oder einer DVD, im Autoradio als einem Rundfunkempfänger vorhanden sind, darzustellen. Neben dem MPEG4 sind auch andere Videoformate wie DFX oder RealVideo möglich, die eine noch höhere Komprimierung ermöglichen.

Unter elektronischem Begleiter wird hier nicht nur ein PDA, sondern auch ein Mobiltelefon verstanden, die insbesondere bei UMTS ein großes Display aufweisen und so zur Darstellung von Videos geeignet sind. Im folgenden wird als Rundfunkempfänger ein Autoradio verstanden. Es ist jedoch auch möglich, dass ein TV-Tuner als Rundfunkempfänger vorhanden ist. Als TV-Tuner kommen analoge Tuner, DVB (Digital Video Broadcasting) und DMB (Digital Multimedia Broadcasting) in Frage.

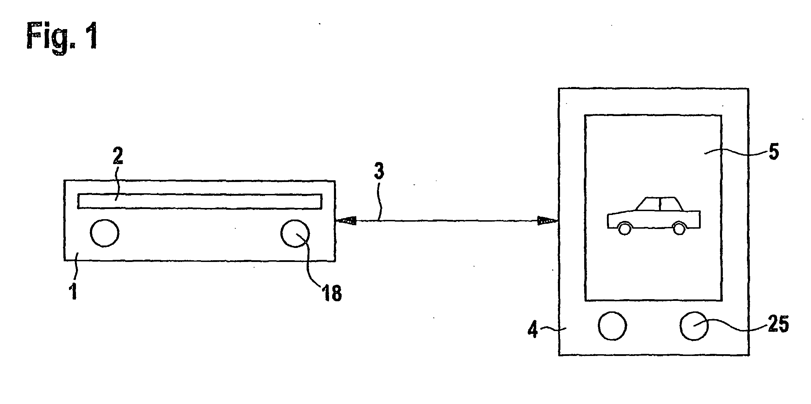

Figur 1 zeigt eine erste Darstellung einer erfindungsgemäßen Vorrichtung. Ein Autoradio 1 mit einem Laufwerk 2 für einen Datenträger, einer Eingabevorrichtung 18 und mit einer Schnittstelle 3 ist über die Schnittstelle 3 mit einem persönlichen digitalen Assistenten (PDA) 4, der der elektronische Begleiter ist, verbunden. Der PDA 4 weist eine Anzeige 5 und eine Eingabevorrichtung 25 auf.

Die Eingabevorrichtung 18 bzw. 25 ist hier jeweils als Tastatur ausgebildet, es sind jedoch auch eine Sprachsteuerung oder andere Eingabeelemente möglich. Das Laufwerk 2 wird hier für CD ROMs verwendet, es ist jedoch alternativ auch ein Laufwerk für DVDs, Chipkarten und Mini-Disks verwendbar. Mit dem Autoradio 2 ist einerseits der Empfang von Rundfunkprogrammen möglich und andererseits das Abspielen von Datenträgern. Auf den Datenträgern befinden sich die Audio- bzw. Videodaten. In einer Weiterbildung kann vorgesehen sein, dass die CD-ROM oder die alternativen Speichermedien auch für eine Abspeicherung von empfangenen Multimediadaten verwendet werden, denn beim Empfang von digitalen Rundfunksignalen, wie es bei DAB (Digital Audio Broadcasting) der Fall ist, sind nahezu beliebige Multimediadaten wie Video übertragbar.

Die Schnittstelle 3 ist hier als Funkschnittstelle, beispielsweise mit Bluetooth realisiert, ausgebildet, sie kann aber auch als Infrarot-Schnittstelle oder als eine kabelgebundene Schnittstelle ausgebildet sein. Der PDA, der die Video-Dekodierungssoftware aufweist, weist die Anzeige 5 auf, die hier als LCD-Bildschirm ausgebildet ist. Es sind jedoch auch andere Bildschirmtechniken bzw. Anzeigetechniken möglich. Insbesondere Bluetooth ermöglicht einen Broadcastmodus, so dass sich gleichzeitig mehrere Nutzer mit ihren PDAs Videos ansehen können. Durch die Versendung eines Ensembles von Videodaten ist es darüber hinaus möglich, dass sich unterschiedliche Nutzer unterschiedliche Videos ansehen können. In diesem Fall sollte dann die Video- und Audiodekodierung durch die einzelnen PDAs vorgenommen werden, wobei die Wiedergabe der Audiodaten dann über an den jeweiligen PDA angeschlossene Kopfhörer erfolgen kann.

Die Videodaten werden von dem Autoradio von dem Datenträger 2 gelesen und über die Schnittstelle 3 zu dem PDA 4 übertragen, der die Videodaten dann mit seiner Videodekodiersoftware oder -hardware dekodiert und auf der Anzeige 5 darstellt. Die Dekodierung der Audiodaten, die zu den Videodaten gegebenenfalls gehören, wird entweder vom Autoradio selbst durchgeführt oder von dem PDA 4. So ist es auch möglich, dass die Audiodaten, die zu den Videodaten gehören, von dem PDA 4 separiert werden und wieder zurück zum Autoradio übertragen werden, so dass das Autoradio dann die Dekodierung der Audiodaten und deren Wiedergabe übernimmt.

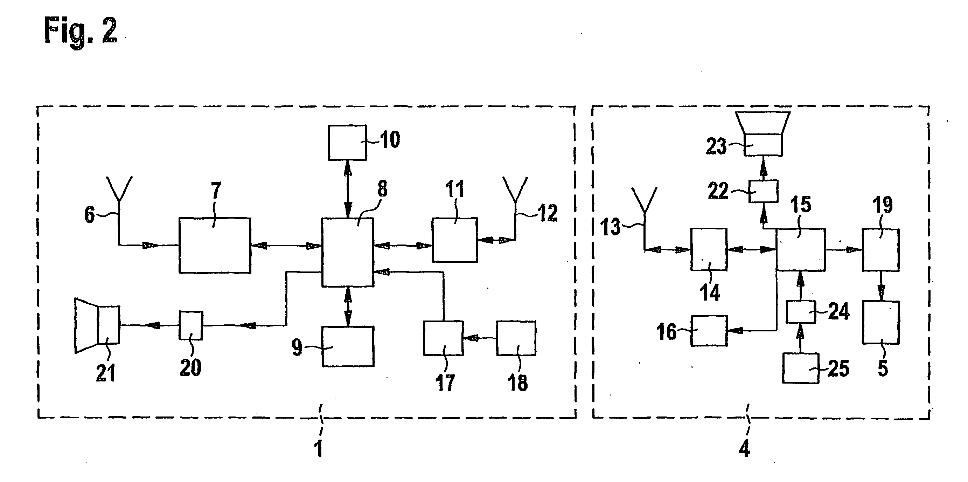

Figur 2 zeigt ein Blockschaltbild der in Figur 1 dargestellten erfindungsgemäßen Vorrichtung. Das Autoradio 1 weist folgende Komponenten auf: Eine Antenne 6, einen Hochfrequenzempfänger 7, einen Prozessor 8, einen Speicher 9, einen Datenträger 10, einen Audioverstärker 20, einen Lautsprecher 21, eine Signalverarbeitung 17, eine Eingabevorrichtung 18, ein Bluetooth-Empfangsmodul 11 und eine Antenne 12. Dabei ist die Antenne 6 zum Empfang der Rundfunksignale an den Hochfrequenzempfänger 7 angeschlossen. Der Hochfrequenzempfänger 7 filtert, verstärkt und setzt die empfangenen Rundfunksignale in eine Zwischenfrequenz um. Weiterhin übernimmt der Hochfrequenzempfänger 7 eine Digitalisierung der empfangenen Rundfunksignale, so dass die weitere Verarbeitung digital erfolgen kann. Eine Kanal- und Quellendekodierung übernimmt dann der über einen ersten Daten-Ein/Ausgang angeschlossene Prozessor 8.

Über einen zweiten Daten-Ein/Ausgang ist der Prozessor 8 mit dem Datenträger 10 verbunden, von dem der Prozessor 8 die entsprechenden Video- und Audiodaten zur Wiedergabe bzw. zur Übertragung zum PDA 4 lädt. Dafür verwendet der Prozessor 8 gegebenenfalls Steuerdaten von dem PDA 4. Zur Zwischenspeicherung verwendet der Prozessor 8 einen über einen dritten Daten-Ein/Ausgang angeschlossenen Speicher 9. Die Audiodaten, die das Autoradio 1 selbst wiedergibt, werden von dem Prozessor 8 dann an den Audioverstärker 20 übertragen, der dann zur akustischen Wiedergabe einen Lautsprecher 21 verwendet. Über einen vierten Daten-Ein/Ausgang ist der Prozessor 8 mit dem Bluetooth-Sende-/Empfangsmodul 11 verbunden. An das Bluetooth-Sende-/Empfangsmodul 11 ist über einen zweiten Daten-Ein/Ausgang die Antenne 12 zur Versendung und zum Empfang der Signale angeschlossen. Ein Benutzer verwendet die Eingabevorrichtung 18 als Eingabemedium, wobei die Signalverarbeitung 17 die Eingabedaten für den Prozessor 8 formatiert.

Der PDA 4 weist eine Antenne 13 zum Empfang und Versenden von Bluetooth-Signalen auf, die an einen ersten Daten-Ein/Ausgang eines Bluetooth-Sende-/Empfangsmoduls 14 angeschlossen ist. Das Bluetooth-Sende-/Empfangsmodul 14 ist über einen zweiten Daten-Ein/Ausgang an einen Prozessor 15 angeschlossen. Über einen zweiten Daten-Ein/Ausgang ist der Prozessor 15 mit einem Speicher 16 verbunden. Über einen ersten Datenausgang ist der Prozessor 15 mit einem Audioverstärker 22 verbunden, der wiederum an einen Lautsprecher 23 angeschlossen ist. Über einen zweiten Datenausgang ist der Prozessor 15 an eine Signalverarbeitung 19 angeschlossen, die die Anzeige 5 ansteuert. Über einen Dateneingang ist der Prozessor 15 mit einer Signalverarbeitung 24 angeschlossen, die Eingabesignale von der Eingabevorrichtung 25 für den Prozessor 15 umsetzt.

Die Bluetooth-Sende-/Empfangsmodule 11 und 14 führen jeweils je nach Senden oder Empfangen von Signalen eine Sende- bzw. Empfangsverstärkung, Filterung und Digital-Analog-Wandlung oder Analog-Digital-Wandlung durch. Dabei werden für die Funkübertragung jeweils Analog-Signale verwendet und die empfangenen Signale dann in Digitalsignale zur weiteren Verarbeitung zurück überführt.

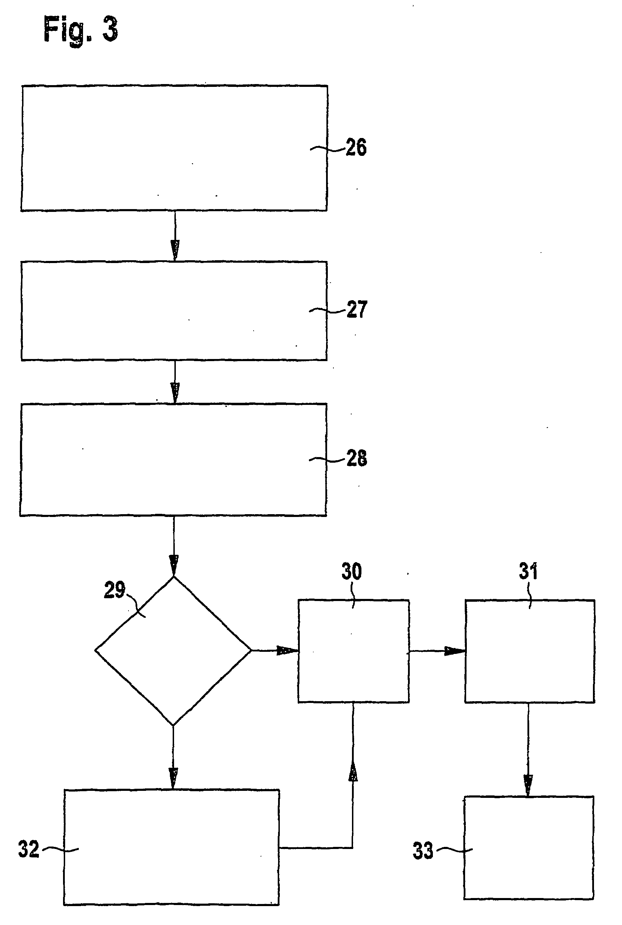

In Figur 3 ist das erfindungsgemäße Verfahren zur Darstellung von Videodaten als Flußdiagramm dargestellt. Im Verfahrensschritt 26 werden die Videodaten von dem Datenträger 10 im Autoradio 1 durch den Prozessor 8 geladen. Sie werden dann im Speicher 9 gegebenenfalls zwischengespeichert, um sie dann zu dem PDA 4 zu übertragen. Gegebenenfalls werden hier Audiodaten von den Videodaten separiert.

In Verfahrensschritt 27 werden dann mittels des Bluetooth-Sende-Empfangsmoduls 11 und der Antenne 12 die Videodaten zu dem PDA 4 als Bluetooth-Signale übertragen. Mit der Antenne 13 und dem Bluetooth-Sende-/Empfangsmodul 14 werden dann die Videodaten empfangen und an den Prozessor 15 des PDA 4 weiter übertragen.

Der PDA 15 führt in Verfahrensschritt 28 die Dekodierung der Videodaten durch. Dafür weist der PDA 15 entsprechende Video-Dekodiersoftware und/oder /-hardware auf. Zur Dekodierung verwendet der Prozessor 15 den Speicher 16 als Zwischenspeicher. Im folgenden stellt sich die Frage, wer die Dekodierung von gegebenenfalls die Videodaten begleitenden Audiodaten durchführt. In Verfahrensschritt 29 wird dies abgefragt und zwar ob die Audiodaten vom Autoradio 1 dekodiert werden sollen. Ist das der Fall, dann werden in Verfahrensschritt 32 die Audiodaten wieder zu dem Autoradio 1 zurück übertragen. In Verfahrensschritt 30 werden dann die Audiodaten entweder vom Prozessor 15 oder vom Prozessor 8 dekodiert. In Verfahrensschritt 31 und 33, die im wesentlichen parallel ablaufen, werden dann entweder mittels des Lautsprechers 21 oder 23 und der Anzeige 5 die Audiodaten bzw. die Videodaten wiedergegeben.

Wenn die Videodaten mit dem Prozessor 8 des Autoradios 1 dekodiert werden, dann wird eine Optimierung der Darstellung auf der Anzeige 5 des PDA 4 vorgenommen. Das ist beispielsweise eine Reduzierung der Auflösung und der Farben des Bildes, eine Drehung des Bildes um 90° und eine Verringerung der Rahmenrate. Da die Anzeige 5 des PDA 4 im allgemeinen mehr hoch als breit ist, die Videos jedoch mehr breit als hoch, ist eine Drehung um 90° für einen Nutzer sinnvoll.

## Patentansprüche

1. Verfahren zur Wiedergabe von Videodaten und Audiodaten, wobei die Videodaten und Audiodaten von einem Datenträger (10) in einer Lesevorrichtung (2) eines Rundfunkempfängers (1) über eine Übertragung zu wenigstens einem elektronischen Begleiter (4) übertragen werden und wobei die Videodaten von dem wenigstens einen elektronischen Begleiter (4) dekodiert und mittels einer Anzeige (5) dargestellt werden, **dadurch gekennzeichnet, dass** der wenigstens eine elektronische Begleiter (4), die zu den Videodaten gehörigen Audiodaten zur akustischen Wiedergabe zum Rundfunkempfänger (1) zurück überträgt.

2. Verfahren nach Anspruch 1, **dadurch gekennzeichnet, dass** von dem wenigstens einen elektronischen Begleiter (4) Steuerdaten für einen Zugriff auf den Datenträger (10) des Rundfunkempfängers (1) zu dem Rundfunkempfänger (1) übertragen werden.

3. Verfahren nach Anspruch 1 oder 2, **dadurch gekennzeichnet, dass** der Rundfunkempfänger (1) zu den Videodaten gehörige Audiodaten selbst dekodiert und mit Mitteln zur akustischen Wiedergabe wiedergibt.

4. Verwendung eines Rundfunkempfängers (1), der eine Lesevorrichtung (2) für den Datenträger (10) und einen ersten Prozessor (8) zur Dekodierung der Audiodaten, eine erste Schnittstelle (11, 12) zur Übertragung von Daten von und zu dem wenigstens einen elektronischen Begleiter (4) und Mittel (20, 21) zur Wiedergabe von Audiodaten aufweist, **dadurch gekennzeichnet, dass** der Rundfunkempfänger das Verfahren nach einem der Ansprüche 1 bis 3 durchführt.

5. Verwendung eines elektronischen Begleiters (4), der eine zweite Schnittstelle (13, 14) zur Übertragung von Daten von und zu dem Rundfunkempfänger (1), einem zweiten Prozessor (15) zur Dekodierung der Videodaten und einer Anzeige (5) zur Wiedergabe der Videodaten aufweist, **dadurch gekennzeichnet, dass** der elektronische Begleiter das Verfahren nach einem der Ansprüche 1 bis 3 durchführt.

## Claims

1. Method for reproducing video data and audio data, where the video data and audio data are transferred from a data storage medium (10) in a reading apparatus (2) in a broadcast radio receiver (1) to at least one electronic companion (4) by means of a transfer, and where the video data are decoded by the at least one electronic companion (4) and are shown using a display (5), **characterized in that** the at least one electronic companion (4) returns the audio data associated with the video data to the broadcast radio receiver (1) for the purpose of audible reproduction.

2. Method according to Claim 1, **characterized in that** the at least one electronic companion (4) transfers control data for accessing the data storage medium (10) in the broadcast radio receiver (1) to the broadcast radio receiver (1).

3. Method according to Claim 1 or 2, **characterized in that** the broadcast radio receiver (1) decodes audio data associated with the video data itself and reproduces them using means for audible reproduction.

4. Use of a broadcast radio receiver (1) which has a reading apparatus (2) for the data storage medium (10) and a first processor (8) for decoding the audio data, a first interface (11, 12) for transferring data from and to the at least one electronic companion (4), and means (20, 21) for reproducing audio data, **characterized in that** the broadcast radio receiver carries out the method according to one of Claims 1 to 3.

5. Use of an electronic companion (4) which has a second interface (13, 14) for transferring data from and to the broadcast radio receiver (1), a second processor (15) for decoding the video data, and a display (5) for reproducing the video data, **characterized in that** the electronic companion carries out the method according to one of Claims 1 to 3.

## Revendications

1. Procédé de restitution de données vidéo et audio, selon lequel les données vidéo et audio sont transmises par un support de données (10) situé dans un dispositif de lecture (2) d'un récepteur radio (1) via une transmission jusqu'à au moins un assistant électronique (4), et dans lequel les données vidéo sont décodées par l'au moins un assistant électronique (4) et sont représentées au moyen d'un dispositif d'affichage (5),
**caractérisé en ce que**
l'au moins un assistant électronique (4) transmet en retour au récepteur radio (1) les données audio appartenant aux données vidéo pour restitution acoustique.

2. Procédé selon la revendication 1,
**caractérisé en ce que**
des données de commande permettant un accès au support de données (10) du récepteur radio (1) sont transmises au récepteur radio (1) à partir de l'au moins un assistant électronique (4).

3. Procédé selon la revendication 1 ou 2,
**caractérisé en ce que**
le récepteur radio (1) décode lui-même les données audio appartenant aux données vidéo et les restitue à l'aide de moyens de restitution acoustique.

4. Utilisation d'un récepteur radio (1), qui présente un dispositif de lecture (2) pour le support de données (10) et un premier processeur (8) pour le décodage des données audio, une première interface (11, 12) pour la transmission de données à partir du et vers au moins un assitant électronique (4) et des moyens (20, 21) de restitution des données audio,
**caractérisée en ce que**
le récepteur radio met en oeuvre le procédé selon l'une des revendications 1 à 3.

5. Utilisation d'un assistant électronique (4), qui présente une deuxième interface (13, 14) pour la transmission des données à partir du et vers le récepteur radio (1), un deuxième processeur (15) pour le décodage des données vidéo et un dispositif d'affichage (5) pour la restitution des données vidéo,
**caractérisée en ce que**
l'assistant électronique met en oeuvre le procédé selon l'une des revendications 1 à 3.
